# FASCICULE DE BREVET EUROPEEN

(11) **EP 1 071 555 B1**
(45) Date de publication et mention de la délivrance du brevet: **30.07.2003**
(21) Numéro de dépôt: 99914604.6
(22) Date de dépôt: 16.04.1999
(51) Int. Cl.: B29C 73/04, B29C 73/32

(54) **PROCEDE D'OBTENTION, REPARATION OU RECONSTRUCTION D'UN OBJET, AVEC UNE PIECE OU MATERIAU COMPOSITE**
VERFAHREN ZUM HERSTELLEN, REPARIEREN ODER WIEDERHERSTELLEN EINES GEGENSTANDES MIT EINEM TEIL ODER MATERIAL AUS VERBUNDWERKSTOFF
METHOD FOR OBTAINING, REPAIRING AND RECONSTRUCTING AN OBJECT, WITH A COMPOSITE PART OR MATERIAL

(30) Priorité: 17.04.1998 FR 9805052
(43) Date de publication de la demande: 31.01.2001
(73) Titulaire: Sunkiss Aeronautique, 69580 Sathonay-Camp (FR)
(72) Inventeur: CHARMES, Michel, F-69370 Saint Didier au Mont d'Or (FR); COMOGLIO, Bruno, F- 69380 CHASSELAY (FR)
(74) Mandataire: Bratel, Gérard
(86) Numéro de dépôt international: FR9900905
(87) Numéro de publication internationale: WO99054117

(56) Documents cités:
- EP-A- 0 147 340
- EP-A- 0 228 719
- EP-A- 0 263 094
- EP-A- 0 839 635
- DE-A- 2 149 985
- DE-A- 4 019 744
- FR-A- 2 693 147
- FR-A- 2 705 914
- GB-A- 2 241 194
- US-A- 2 439 083
- US-A- 3 383 265
- US-A- 4 243 368
- DASTIN S: "REPAIRING ADVANCED COMPOSITE MATERIALS" MACHINE DESIGN, vol. 58, no. 4, 1 février 1986 (1986-02-01), pages 86-90, XP002029723 ISSN: 0024-9114
- HEITZ E: "DIE REPARATUR VON SANDWICHBAUTEILEN" PLASTVERARBEITER., vol. 28, no. 9, 1977, pages 469-476, XP002110974 ZECHNER UND HUETHIG VERLAG GMBH. SPEYER/RHEIN., DE ISSN: 0032-1338
- DIBBLE M A: "SHAPING THE FUTURE OF FLIGHT" MACHINE DESIGN, vol. 62, no. 10, 24 mai 1990 (1990-05-24), pages 70-77, XP000135992 ISSN: 0024-9114

## Description

La présente invention concerne principalement la reconstitution ou reconstruction d'un objet, notamment d'un objet ou d'une pièce composite ou en matériau composite, comportant un défaut à traiter ou réparer, affectant sa surface au moins, voire toute son épaisseur.

Plus précisément, l'invention s'intéresse à la reconstitution ou reconstruction, ou réparation d'objets tels que précédemment définis, en disposant dans ou sur ledit défaut, d'une part des fibres continues ou. discontinues, mécaniquement résistantes, organisées par exemple sous forme de tissu technique ou nappe, ou non organisées, par exemple en vrac ou sous forme non tissée, et d'autre part une résine ou matériau polymérique (une seule résine ou un alliage de polymères) thermo-plastique ou réticulable, notamment thermo-réticulable ou thermo-durcissable, le tout formant à l'état solide une matrice dans laquelle sont distribuées ou réparties lesdites fibres. A titre d'exemple, les fibres sont en verre, carbone ou keviar, et la résine est une résine époxy, ou polyester, ou phénolique, ou bi-maléimide. Ces fibres peuvent être apportées dans le défaut, de manière séparée par rapport à la résine, auquel cas lesdites fibres sont disposées dans ledit défaut par exemple sous forme de couches superposées de tissu, puis la résine est injectée dans la masse de tissu sous forme liquide, ou de manière concomitante, auquel cas on utilise un matériau composite prêt à l'emploi, par exemple un matériau pré-imprégné, comportant une armure constituée par les fibres précitées et une matrice de la résine, par exemple partiellement ou non réticulée.

Dans tous les cas, la structure obtenue sur ou dans le défaut est dite monolithe ou monolithique, car monobloc à l'état solide, sans qu'il soit en pratique possible de séparer, par exemple par délamination, les composants précités, à savoir fibres ou couches d'un côté, et résine de l'autre.

Aux fins de la présente description, et dans les revendications, sauf indications contraires, par "composite", on réfère à une structure, un objet ou un matériau, constitué de manière hétérogène par l'assemblage de plusieurs matériaux ou composants élémentaires, à savoir et notamment fibres et résines, liés entre eux, et présentant ensemble des propriétés, notamment mécaniques, qu'aucun composant ne possède à lui tout seul.

En pratique, dans toute la présente description, le terme "résine" réfère à des matériaux polymériques, pouvant être qualifiés par la pratique par le terme d'adhésif ou colle, par exemple structurale, qu'il s'agisse de matières plastiques thermo-plastiques ou durcissables.

Conformément au document DE-A-4019744, et plus particulièrement au mode d'exécution de la Fig. 7 de ce document, on a décrit un procédé de reconstitution ou reconstruction d'un objet, par exemple d'un objet composite, comportant un défaut affectant sa surface au moins. Selon ce procédé
a - on dispose dans ou sur ce défaut au moins une pièce ou un matériau rapporté, dont la forme et les dimensions sont adaptées à celles dudit défaut, cette pièce ou ce matériau comprenant des fibres continues ou discontinues, mécaniquement résistantes, organisées ou non ; par exemple, on dispose dans ce défaut une superposition de couches de tissu, rassemblant de manière organisée les fibres mécaniquement résistantes,
b - on dispose dans ou sur ce défaut un matériau polymère, ou résine, pour obtenir une matrice plastique dans laquelle sont distribuées ces fibres ; par exemple, ce matériau polymère est apporté sous forme liquide et sous pression, dans le défaut, en imprégnant ainsi les fibres précitées, et en obtenant après durcissement du matériau polymère une matrice plastique solide dans. laquelle sont distribuées ces. fibres,
c - on dispose sur la pièce rapportée, imprégnée par la matrice plastique, successivement et l'un. au-dessus de l'autre, un moyen de drainage gazeux des gaz évacués de la matrice plastique pendant l'étape (d) ci-après, et une enveloppe d'extraction des gaz, formant avec le reste de l'objet en cours de reconstruction ou réparation, une enceinte étanche vis à vis de l'atmosphère extérieure, circonscrivant le défaut et la pièce rapportée ; à titre d'exemple, le moyen de dégazage consiste en une nappe textile de drainage gazeux,
d - tout en évacuant l'enceinte étanche, on chauffe la pièce rapportée avec une source radiante, dont l'émission comprend un rayonnement infra-rouge, et en plaçant cette source par rapport au défaut précité, de manière à irradier l'enveloppe d'extraction des gaz évacués de la matrice plastique.

Le document DE-A-4019744 a décrit le procédé précédemment identifié, uniquement pour traiter ou réparer des objets massifs en un seul et même matériau, à l'exclusion de tout autre objet.

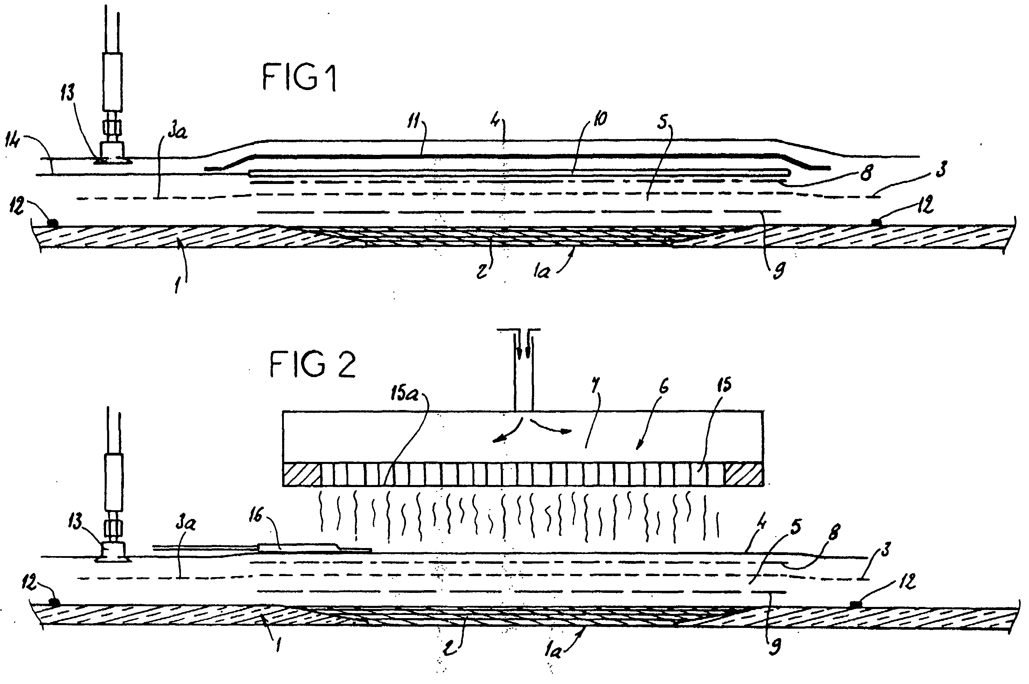

Par ailleurs, aujourd'hui, pour réparer un objet composite monolithique, par exemple dans l'industrie aéronautique, on procède de la manière suivante, par référence à la figure 1 qui est une vue éclatée et schématique :
- on prépare, notamment par découpe, une ou plusieurs pièces 2, ou un matériau, dont la forme et les dimensions sont adaptées à celles du défaut 1a à réparer ou combler ; ce matériau ou ces pièces, ou assemblées ou superposées les unes aux autres, sont eux-mêmes en matériau composite, au sens où elles associent de manière liée une matrice plastique et des fibres continues ou discontinues, organisées ou non, mécaniquement résistantes, par exemple en carbone, kevlar, verre, etc... ;
- on rapporte et on dispose la pièce ou les pièces 2, ou le matériau ainsi préparé, dans ou sur le défaut 1a de l'objet traité ;
- on dispose successivement sur la pièce 2 et sur l'objet 1, de part et d'autre du défaut, et les uns au-dessus des autres :
   * un film 9 perforé ou non, non adhésif vis-à-vis de la pièce rapportée 2 ultérieurement traitée, par exemple réticulée ;
   * une nappe textile 3 de drainage gazeux par sa bordure périphérique 3a, des gaz qui seront évacués de la matrice plastique pendant son traitement, par exemple sa réticulation,
   * un film d'étanchéité 8 vis-à-vis de la matière plastique ;
   * une structure souple chauffante 10, en forme de couverture, comportant en général des résistances électriques chauffantes noyées dans un matériau isolant électrique, par exemple silicone ;
   * une couche 11 d'isolation thermique vis-à-vis de l'extérieur ;
   * et une enveloppe souple 4 d'extraction des gaz, formant avec des moyens appropriés 12 (par exemple des joints), avec le reste de l'objet 1, une enceinte 5 étanche vis-à-vis de l'atmosphère extérieure ; cette enceinte circonscrit non seulement le défaut la et la pièce 2 rapportée, mais aussi tous les éléments précédemment décrits superposés.

L'enveloppe d'extraction 4 est mise sous vide, par exemple avec une pompe 13, et la structure souple chauffante connectée à une source électrique 14.

Avec des moyens de contrôle appropriés, notamment capteurs de température, on traite thermiquement, par exemple on thermo-réticule la matrice plastique, dans le cas où cette dernière est un polymère réticulable ou thermo-durcissable. Le traitement thermique est étroitement contrôlé en fonction notamment de la nature de la matrice plastique, et des performances mécaniques recherchées.

La présente invention concerne la reconstitution ou reconstruction d'objets composites alvéolaires, de types sandwich, c'est à dire d'objets comportant une couche alvéolaire solide, par exemple un matériau du type "nid d'abeille", en diverses matières telles que carton imprégné par une résine phénolique, en matière plastique, ou encore en métal, ou encore en une mousse plastique structurale. Cette couche alvéolaire est liée, de manière structurale, au moins d'un côté à une couche monolithique, telle que définie précédemment, c'est à dire combinant de manière monobloc une matrice plastique et des fibres mécaniquement résistantes distribuées dans ladite matrice.

Aujourd'hui, il n'existe aucune solution satisfaisante, voire pas de solution du tout, pour réparer ou reconstruire des objets composites de type sandwich, en particulier lorsqu'on ne peut accéder qu'à une face dudit objet.

En pratique, pour reconstruire ou reconstituer un tel objet, par exemple la partie extrados d'une aile d'aéronef ayant une structure composite sandwich, on usine tout d'abord le défaut pour lui conférer une géométrie régulière ou contrôlée. Puis on dispose au fond du défaut usiné une résine ou un adhésif, puis une pièce rapportée en matériau alvéolaire, ajustée au niveau de la couche alvéolaire de l'objet à réparer, également avec une résine de liaison avec le reste de la couche alvéolaire ; et finalement des fibres mécaniquement résistantes et une matrice plastique sont disposées au niveau de la couche monolithique de l'objet à réparer, pour reconstituer ladite couche au niveau du défaut.

L'apport thermique et la pression requis pour lier et assembler l'ensemble des matériaux ou pièces comblant le défaut, et ces derniers au reste de l'objet à reconstituer ou reconstruire, sont obtenus en procédant en une ou plusieurs fois, selon les étapes opératoires suivantes :
- on dispose sur l'objet réparé, au niveau du défaut, successivement et l'un au-dessus de l'autre, une nappe textile de drainage gazeux par sa bordure périphérique des gaz évacués de la matrice plastique pendant l'étape ci-après, une structure souple chauffante, en forme de couverture, comportant des résistances électriques chauffantes noyées dans un matériau isolant électrique (par exemple silicone), et une enveloppe d'extraction desdits gaz, formant avec le reste de l'objet une enceinte étanche vis à vis de l'atmosphère extérieure, circonscrivant le défaut et les pièces et matériaux qui y sont rapportés ;
- tout en évacuant l'enceinte étanche, on chauffe les pièces et matériaux rapportés, avec la structure souple chauffante pour générer ou amorcer la réticulation de la matrice plastique, dans le cas d'une résine thermo-réticulable.

Dans le cas d'un objet composite comportant une face inaccessible, par exemple intérieure, pour traiter thermiquement la résine au fond du défaut, il n'existe pas d'autres solutions que :
- de surchauffer avec la structure souple chauffante, vers le coeur du défaut, pour tenter d'atteindre thermiquement la face intérieure ; mais une telle surchauffe, outre qu'elle est peu efficace, est susceptible d'endommager la face extérieure de l'objet à réparer ; ou alors il faut refroidir la structure souple chauffante, ou l'objet, en périphérie
- démonter l'objet, pour avoir accès à sa face intérieure, ou remplacer l'objet à réparer, ce qui dans certains cas n'est pas possible, ou est en tout cas économiquement pénalisant.

Dans le premier cas, lorsqu'on n'apporte pas le cycle de température requis pour la réticulation de la résine en fond de défaut, cette dernière n'a pas lieu ou est imparfaite, de telle sorte que c'est toute la reconstruction de l'objet qui se trouve compromise.

La présente invention a donc pour objet essentiel de trouver une solution à la reconstruction ou reconstitution d'un objet composite alvéolaire du type sandwich.

Selon la présente invention, contre toute attente, on a découvert que l'utilisation d'une source radiante émettant un rayonnement infra-rouge, placée par rapport au défaut à traiter de manière à irradier l'enveloppe d'extraction des gaz évacués de la matrice plastique, permettait de chauffer au-delà de la couche alvéolaire de l'objet composite sandwich, par rapport à ladite enveloppe d'extraction, et ce nonobstant la résistance thermique normalement opposée par toute couche alvéolaire.
Un procédé selon l'invention, de reconstitution ou reconstruction d'un objet composite, comprenant une couche alvéolaire, liée au moins d'un côté à une couche superficielle, par exemple nid d'abeille, ledit objet comprenant un défaut affectant au moins ladite couche superficielle et ladite couche alvéolaire, est caractérisé en ce que, successivement :
a) Après avoir préparé le défaut, on dispose au fond dudit défaut au moins une pièce ou ou un matériau rapporté, dont la forme et les dimensions sont adaptées à celles du défaut, la pièce ou ledit matériau comprenant des fibres continues ou discontinues, mécaniquement résistantes, organisées ou non; on dispose au fond dudit défaut, de manière séparée ou de manière concomitante par rapport aux fibres de la pièce ou dudit matériau, une première résine, pour obtenir lors de l'étape (e) une matrice plastique dans laquelle sont distribuées lesdites fibres
b) On insère dans le défaut une partie alvéolaire de remplacement, par exemple nid d'abeille.
c) On dispose une deuxième résine sur la partie exposée de la partie alvéolaire, avec au moins une pièce d'un tissu de fibres continues ou discontinues, la deuxième résine étant apportée de manière séparée ou de manière concomittante par rapport aux fibres de ladite pièce.
d) On dispose sur les éléments rapportés dans le défaut, successivement et l'un au-dessus de l'autre, un moyen, par exemple une nappe textile, de drainage gazeux des gaz évacués des résines pendant l'étape (e), et une enveloppe d'extraction desdits gaz, formant avec le reste de l'objet une enceinte étanche vis-à-vis de l'atmosphère extérieure, circonscrivant le défaut et lesdits éléments rapportés.
e) Tout en évacuant l'enceinte étanche, on chauffe la pièce rapportée avec une source radiante, dont l'émission comprend un rayonnement infrarouge, et en plaçant ladite source par rapport au défaut de manière à irradier l'enveloppe d'extraction des gaz évacués de la matrice plastique et moyennant quoi ladite source radiante est opérante au-delà de la couche alvéolaire.

La présente invention concerne également les modes d'exécution suivants :
- Le procédé de reconstitution ou reconstruction de l'objet traité comporte une seule étape, auquel cas, par exemple la première résine nécessite une température de traitement, par exemple de réticulation, moins importante que la température de traitement, par exemple de réticulation, de la deuxième résine.
- Le même procédé peut être effectué selon deux étapes, à savoir une première étape pendant laquelle on dépose une résine au fond du défaut, on insère la partie alvéolaire de remplacement, par exemple en nid d'abeille, et on procède aux deux opérations définies précédemment ; et une seconde étape selon laquelle on applique cette résine, c'est à dire la même résine, sur la partie supérieure exposée de la partie alvéolaire, et on procède à nouveau aux deux opérations décrites précédemment.

Préférentiellement, la pièce de tissu associée à la deuxième résine est composite, par exemple imprégnée, car comprenant la deuxième résine formant une matrice plastique dans laquelle les fibres continues ou discontinues sont distribuées.

La résine, ou chaque résine est un matériau polymère thermo-réticulable ou thermo-plastique.

Le rayonnement infra-rouge est compris dans une gamme entre 1 et 10 microns. A titre d'exemple, la source radiante comprend au moins un brûleur catalytique.

L'enveloppe d'extraction est obtenue à partir d'au moins un matériau relativement transparent vis à vis d'un rayonnement infra-rouge, par exemple en polyamide.

Préférentiellement, on dépose la première résine au fond du défaut, avec au moins une autre pièce d'un tissu de fibres continues ou discontinues ; à titre d'exemple, l'autre pièce de tissu est composite, par exemple un pré-imprégné, car comprenant la première résine formant une matrice plastique dans laquelle les fibres continues ou discontinues sont distribuées.

Préférentiellement, l'objet composite traité du type sandwich comprend la couche alvéolaire entre deux couches monolithiques.

La couche alvéolaire et la partie alvéolaire de remplacement, c'est à dire de comblement du défaut, sont faites en un matériau alvéolaire, par exemple une mousse plastique structurale, par exemple en résine époxy.

A titre indicatif, le moyen de drainage gazeux peut être une grille, par exemple métallique.

La présente invention est maintenant décrite par référence au dessin annexé dans lequel :
- **la figure 1** représente, de manière éclatée, un ensemble tel qu'obtenu en utilisant un procédé de reconstitution ou reconstruction selon l'art antérieur ;
- **la figure 2** représente, toujours en vue éclatée, un ensemble tel qu'obtenu en utilisant un procédé de reconstitution ou reconstruction, tel qu'il sera ensuite appliqué selon l'invention à un objet composite alvéolaire du type sandwich.
- **la figure 3** représente un objet composite alvéolaire de type sandwich, reconstitué conformément à la présente invention.
- **les figures 4 et 5** représentent un montage expérimental, ayant permis de mettre en évidence l'efficacité d'un rayonnement infra-rouge, d'une part au travers d'une enveloppe d'extraction des gaz, et d'autre part au-delà d'une couche alvéolaire pouvant appartenir à un objet composite ; selon ces figures, les références numériques communes avec celles des figures 1 à 3 identifient les mêmes éléments ou composants, ou des éléments ou composants, quoique différents, ayant les mêmes fonctions.

Conformément à la figure 2, l'objet à réparer, reconstituer ou reconstruire, lui-même en matériau composite, est repéré par la référence numérique 1. Il s'agit par exemple d'une paroi appartenant à l'aile d'un aéronef. Au cours d'un choc accidentel, par exemple, cet objet composite comporte un défaut 1a, en l'occurrence un trou, qu'il est nécessaire de combler, de manière à reconstituer l'objet initial. Le trou est d'abord entaillé ou retaillé de manière régulière et prédéterminée.

A cette fin, on découpe une ou plusieurs pièces 2, elles-mêmes en matériau composite, superposées, rapportées dans le défaut 1a pour le combler, de manière à créer une fois l'objet réparé une surface continue tant extérieure qu'intérieure. Chaque pièce 2 consiste en un matériau composite, car comprenant une matrice plastique d'au moins un matériau polymère, par exemple réticulable, dans laquelle sont distribuées des fibres continues ou discontinues, mécaniquement résistantes, par exemple fibres de carbone ; il s'agit par exemple de pièces en tissu technique etlou pré-imprégné. Ces tissus et/ou pré-imprégnés peuvent être placés en alternance l'un au-dessus de l'autre. Des tissus en fibres de carbone convenables sont disponibles sous différentes dénominations, par exemple auprès de la société BROCHIER (France) sous la dénomination G801, et des pré-imprégnés convenables sont disponibles par exemple auprès de la société HEXCEL (France), sous la dénomination REDUX 312L.

On dispose donc ces pièces dans le trou 1a, comme représenté à la figure 2 avec une résine polymérisable, par exemple la matrice plastique d'au moins un matériau polymère réticulable déjà mentionné. De telles résines sont disponibles auprès de différentes Sociétés, par exemple de STRUCTIL (France), notamment sous la dénomination EA9396.

On dispose sur la pièce ou les pièces 2 rapportées, successivement, et l'un au-dessus de l'autre :
- un film 9, perforé ou non, non adhésif vis-à-vis de la pièce rapportée 2, une fois réticulée ;
- une nappe textile 3 de drainage gazeux par sa bordure périphérique 3a, à savoir des gaz évacués de la matrice plastique pendant l'étape de réticulation ;
- un film 8 d'étanchéité vis-à-vis de la matière plastique fluide, c'est-à-dire celle de la matrice des pièces 2 ;
- et enfin une enveloppe 4 d'extraction des gaz, formant avec le reste de l'objet 1, une enceinte étanche 5, grâce au joint 12, vis-à-vis de l'atmosphère extérieure ; cette enceinte circonscrit le défaut 1a de la pièce rapportée 2.

On chauffe la pièce rapportée 2, en disposant d'une source radiante infrarouge 6, par exemple un brûleur catalytique 7, émettant un rayonnement infrarouge ayant un spectre de longueurs d'onde compris entre 1 et 10 microns, et en plaçant cette source par rapport au défaut 1a, de manière à irradier l'enveloppe 4 d'extraction des gaz, laquelle est par ailleurs comprimée en raison de l'évacuation de l'enceinte 5 précédemment définie. Par différence avec la représentation de la figure 1, on n'utilise plus de structure souple chauffante 10, et de couche 11 d'isolation thermique.

Le brûleur catalytique 7 est agencé de manière connue en soi. Il s'agit d'un brûleur permettant de brûler par combustion catalytique un mélange d'air comburant et d'un gaz combustible, traversant un support inerte et réfractaire 15, perforé ou perméable, comprenant un catalyseur de combustion. C'est à partir de la face extérieure 15a de ce support 15 que le rayonnement infrarouge est émis en direction de l'enveloppe 4 d'extraction des gaz.

Préférentiellement, l'enveloppe d'extraction 4 est obtenue à partir d'au moins un matériau relativement transparent vis à vis du rayonnement infrarouge émis par la source 6, par exemple en polyamide ou polyimide.

L'enveloppe d'extraction 4 peut être disposée directement au contact de la nappe textile de drainage 3. Et des moyens de contrôle 16, par exemple sondes de température, sont disposés à l'intérieur et/ou l'extérieur de l'enveloppe d'extraction 4, de manière à contrôler le processus thermique de traitement, par exemple réticulation de la matrice plastique de la pièce rapportée 2.

Bien d'autres sources de rayonnement infrarouge peuvent être mises en oeuvre, dès lors que le rayonnement émis répond aux exigences précédemment décrites. Ainsi, on peut utiliser un générateur électrique de rayons infra-rouges, conforme au document EP-A-0 147 340.

Selon la présente invention, il est possible de réparer un défaut, par exemple dans une aile d'aéronef comportant une structure composite de type sandwich comportant un nid d'abeille, ou tout autre matériau alvéolaire de remplissage, de la manière suivante :
- on dépose de la résine polymérisable, par exemple la résine EA9396 déjà mentionnée, au fond du défaut, et on insère une partie de nid d'abeille de remplacement ;
- on procède comme décrit par référence à la figure 2, pour effectuer le traitement, par exemple la polymérisation ou réticulation de la résine, de manière à ce que le nid d'abeille de remplacement soit pris dans la structure, c'est-à-dire en plaçant les film 9, nappe 3 et enveloppe 4, les uns au dessus des autres, en mettant sous vide et en rapportant une source radiante infra-rouge sur l'objet à réparer ;
- après refroidissement, on applique à nouveau la même résine ou le pré-imprégné sur la partie supérieure exposée du nid d'abeille, et on procède comme décrit par référence à la figure 2, afin d'intégrer complètement le nid d'abeille dans la structure composite ;
- on effectue une étape de finition pour égaliser la surface extérieure.

Pour cet exemple, il est également possible de n'effectuer qu'une seule étape de réparation, en choisissant deux résines différentes, une première nécessitant une température de traitement ou polymérisation moins importante, étant placée au fond du défaut, suivie du nid d'abeille de remplacement, et la deuxième, présentant une température de traitement ou polymérisation ou de réticulation plus élevée, étant placée sur le nid d'abeille avec les tissus ou pré-imprégnés, de manière à ce que la température créée par la source radiante infra-rouge soit suffisante pour polymériser l'ensemble en une seule étape, la chaleur appliquée étant moins importante à l'intérieur du défaut que vers la surface extérieure de ce dernier.

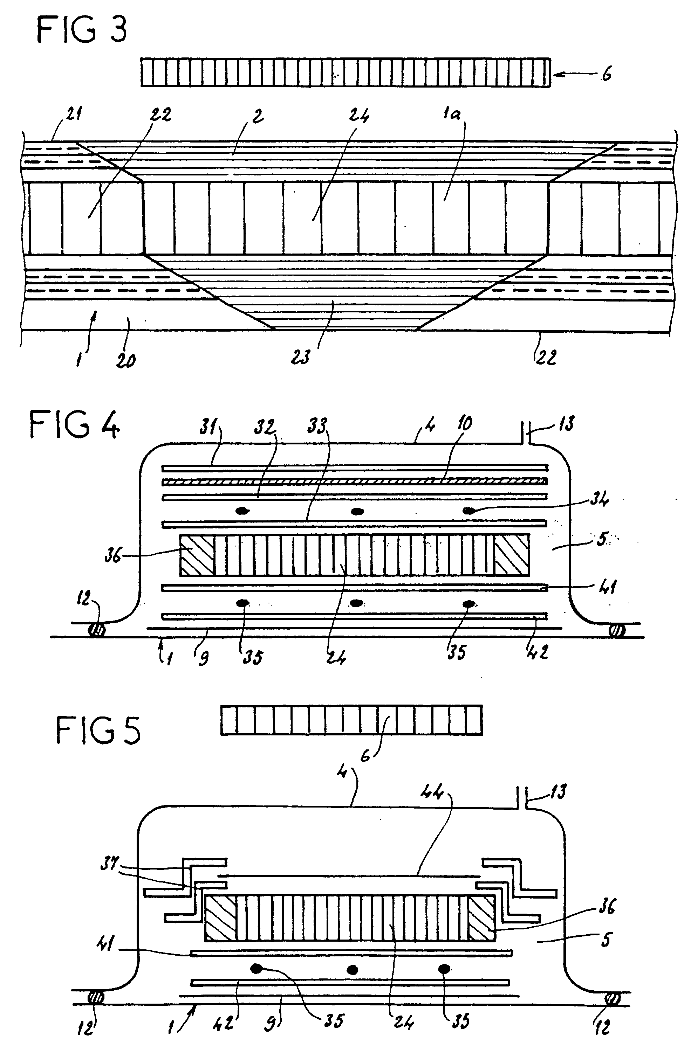

Le procédé décrit précédemment a été découvert et validé quant à son efficacité, par le protocole expérimental décrit ci-après par référence aux figures 4 et 5.

Le montage expérimental montré à la figure 4 est contrôlé et piloté au moyen d'une mallette de contrôle et fonctionnement, appelée ANITA, référence AN 8501, et telle que disponible en France auprès de la Société GMI, 204, Boulevard Saint Germain 75007 - PARIS.

A partir d'un support ou objet plat 1, du bas vers le haut, on superpose :
- un film 9 perforé ou non, par exemple un tissu anti-adhérent revêtu par du Teflon®^{,}
- deux pièces 41 et 42, de tissu pré-imprégné, ce tissu étant vendu par la Société HEXCEL sous la. référence HEXCEL 1581 ES 36 D 50 % (correspondant à un tissu de verre de référence 1581 de la même Société, noyé dans une matrice de résine époxy de référence ES 36 D de la même Société, le poids de résine correspondant à 50 % du poids total du tissu pré-imprégné),
- des thermocouples de mesure 35 disposés entre les deux pièces 41 et 42,
- une pièce rectangulaire d'une structure en nid d'abeille, disposée à l'intérieur d'un cadre métallique 36, en matériau dit NOMEX, tel que fabriqué et vendu par la Société américaine DUPONT DE NEMOURS, et correspondant à un nid d'abeille en papier imprégné d'une résine polyamide aromatique meta-aramide ; la structure en nid d'abeille a une épaisseur de 55 mm et les alvéoles de forme hexagonale ont des dimensions 6 x 5 x 3 mm.
- deux nappes textiles 32 et 33, par exemple d'un matériau plastique non tissé, entre lesquelles des thermocouples 34 sont insérés
- une structure souple chauffante 10, comportant des résistances électriques noyées dans un matériau isolant, par exemple en silicone
- une nappe 31 de dégazage, au-dessus de la structure souple chauffante 10, une même nappe de dégazage 32 étant disposée au-dessous de cette structure
- et pour terminer, une enveloppe souple 4 d'extraction des gaz, formant une enceinte étanche 5, renfermant la totalité des éléments ou composants précédemment décrits, et ce grâce à des joints d'étanchéité 12 entre cette enveloppe et le support ou objet 1

Par différence, conformément à la figure 5, le montage expérimental représenté sur cette dernière ne comprend plus la structure souple chauffante 10 et les nappes de drainage gazeux 31 et 32, ni les thermocouples de régulation 34. Le moyen de drainage consiste en une grille métallique 44 disposée au-dessus la face supérieure de la pièce 24 en nid d'abeille. Cette grille métallique est supportée par un cadre 37 constitué par deux éléments ou bordures en matériau non tissé, en serrant la périphérie de la grille métallique 44. La structure souple chauffante 10 est remplacée par une source radiante 6 infra-rouge disposée à l'extérieur de l'enveloppe souple 4, et rayonnant vers cette dernière.

La structure de la pièce 24 en nid d'abeille a une épaisseur de 55 mm, et des alvéoles de forme hexagonale (5 x 3 x 6 mm).

En dehors des différences précédemment énoncées, tous les autres paramètres d'agencement et de fonctionnement demeurent identiques.

Avec le montage de la figure 4, conformément aux prescriptions du fournisseur du tissu pré-imprégné, on programme pour la structure souple chauffante 10, un cycle de températures comprenant :
- pendant environ 40 minutes, une montée de 2,5°C/minute
- un plateau de 90 minutes à 120°C
- une descente en température à partir de 130 minutes.

Avec les thermocouples 35, tout au long du cycle défini précédemment, on constate qu' on ne dépasse pas au niveau du tissu pré-imprégné une température de 30°C, tandis que les thermocouples 34 indiquent, au vu de la pièce 24 une température de l'ordre de 110°C.

Dans ces conditions, il est impossible d'obtenir une bonne polymérisation de la matrice plastique du tissu pré-imprégné 41, puisque avec une température de consigne de 120°C (correspondant au plateau de température), obtient tout juste un pré-imprégné un peu ramolli, et toujours très souple. En particulier il demeure facile de décoller la pièce de tissu pré-imprégné 41 par rapport à la pièce 24 en nid d'abeille. On ne détecte donc aucun signe de polymérisation, compte tenu de la température maximum de 30° C précédemment constatée.

Avec le montage de la figure 5, on dispose la source radiante infra-rouge à environ 400 mm au-dessus de l'enveloppe d'extraction 4. Il s'agit d'un thermo-réacteur catalytique RX, tel que vendu par la Société SUNKISS, le rayonnement infra-rouge ayant les caractéristiques suivantes :
- puissance rayonnée par une unité de surface : entre 20 et 50 kw/m²
- rayonnement infra-rouge compris entre 1 µm et 10 µm

Déjà, en faisant fonctionner la source radiante, on constate un chauffage effectif au niveau des pièces 41 et 42, c'est à dire des thermocouples 35, ce qui permet de réguler la température au niveau des pièces pré-imprégnées elles-mêmes, ce qui n'est pas possible selon le montage selon figure 4.

Au niveau des pièces 41 et 42, on peut donc contrôler la température, en agissant sur la source radiante, pour obtenir une évolution de la température, sensiblement similaire au cycle requis pour la réticulation de la matrice plastique, en obtenant en particulier un palier de température à 120° C, et même au-delà si désiré.

A la fin de l'essai, on constate que la matrice plastique des pièces pré-imprégnées 41 et 42 est polymérisée de façon visiblement homogène, avec un touché sec. Les feuilles monolithiques obtenues sont rigides et solidaires de la pièce 24 en nid d'abeille.

Par conséquent, une source radiante infra-rouge permet de polymériser un pré-imprégné au travers d'un nid d'abeille, ce qui est impossible avec une seule structure souple chauffante, compte tenu de la comparaison des deux essais effectués.

La même expérience que celle identifiée précédemment peut être reconduite, avec des résultats similaires, avec d'autres types de matériaux en nid d'abeille, par exemple en aluminium, référence Derenid vendu par la Société française EDERENA CONCEPT.

Grâce à l'invention, et selon la figure 3, il devient possible de reconstruire ou reconstituer un objet composite sandwich, comprenant une couche alvéolaire 22 du type nid d'abeille, entre deux couches monolithiques 21 et 20. Pour ce faire, le défaut 1a est d'abord usiné, pour déterminer dans la couche monolithique 20 un trou chanfreiné, dans la couche alvéolaire 22 un trou cylindrique, et dans la couche monolithique 21, à nouveau un trou chanfreiné. Plusieurs pièces 23, découpées dans un tissu pré-imprégné, sont superposées dans le trou chanfreiné dans la couche monolithique 20. Puis une pièce 24 en nid d'abeille est disposée dans le trou cylindrique de la couche alvéolaire 22, par exemple avec une résine durcissable. Et finalement plusieurs pièces 2, découpées dans un tissu pré-imprégné, sont superposées dans le trou chanfreiné dans la couche monolithique 21. Grâce à toutes ces pièces, on comble complètement le défaut 1a, de manière affleurante par rapport, et à la face supérieure de l'objet 1, et à sa face inférieure.

Puis, au niveau de la couche monolithique supérieure 21, en circonscrivant le défaut 1a, on procède en une ou plusieurs étapes, aux opérations précédemment décrites par référence à la figure 2.

## Revendications

1. Procédé de reconstitution ou reconstruction d'un objet (1) composite comprenant une couche alvéolaire (22), liée au moins d'un côté à une couche superficielle, par exemple nid d'abeille, ledit objet comprenant un défaut (1a) affectant au moins ladite couche superficielle et ladite couche alvéolaire, **caractérisé en ce que**, successivement :
a) Après avoir préparé le défaut (1a), on dispose au fond de ce dernier au moins une pièce (23) ou un matériau rapporté, dont la forme et les dimensions sont adaptées à celles du défaut (1a), la pièce ou ledit matériau comprenant des fibres continues ou discontinues, mécaniquement résistantes, organisées ou non ; on dispose au fond dudit défaut (1a), de manière séparée ou de manière concomitante par rapport aux fibres de ladite pièce ou dudit matériau, une première résine, pour obtenir lors de l'étape (e) une matrice plastique dans laquelle sont distribuées lesdites fibres
b) On insère dans le défaut (1a) une partie (24) alvéolaire de remplacement, par exemple nid d'abeille.
c) On dispose une deuxième résine sur la partie exposée de la partie (24) alvéolaire, avec au moins une pièce (2) d'un tissu de fibres continues ou discontinues, la deuxième résine étant apportée de manière séparée ou de manière concomitante par rapport aux fibres de ladite pièce.
d) On dispose sur les éléments rapportés dans le défaut (1a), successivement et l'un au-dessus de l'autre, un moyen, par exemple une nappe textile (3), de drainage gazeux des gaz évacués des résines pendant l'étape (e), et une enveloppe (4) d'extraction desdits gaz, formant avec le reste de l'objet une enceinte étanche (5) vis à vis de l'atmosphère extérieure, circonscrivant le défaut (1a) et lesdits éléments rapportés.
e) Tout en évacuant l'enceinte étanche (5), on chauffe la pièce rapportée avec une source radiante (6), dont l'émission comprend un rayonnement infrarouge, et en plaçant ladite source par rapport au défaut (1a) de manière à irradier l'enveloppe (4) d'extraction des gaz évacués de la matrice plastique, et moyennant quoi ladite source radiante est opérante au-delà de la couche alvéolaire (24).

2. Procédé selon la revendication 1, **caractérisé en ce qu'**on procède selon une seule étape.

3. Procédé selon la revendication 2, **caractérisé en ce que** la première résine nécessite une température de traitement moins importante que la température de traitement de la deuxième résine.

4. Procédé selon la revendication 1, **caractérisé en ce qu'**on procède selon deux étapes, à savoir une première étape pendant laquelle on dépose une résine au fond du défaut (1a), on insère ladite partie (24) alvéolaire de remplacement, par exemple nid d'abeille, et on ,procède aux opérations (c) et (d), et une seconde étape selon laquelle on applique une résine sur la partie supérieure exposée de la partie alvéolaire (24) et on procède à nouveau aux opérations (c) et (d).

5. Procédé selon la revendication 1, **caractérisé en ce que** la pièce (2) de tissu est composite, par exemple un pré-imprégné, car comprenant la deuxième résine formant une matrice plastique dans laquelle les fibres continues ou discontinues sont distribuées.

6. Procédé selon la revendication 1, **caractérisé en ce que** chaque résine est un matériau polymère thermo-réticulable.

7. Procédé selon la revendication 1, **caractérisé en ce que** chaque résine est un matériau polymère thermo-plastique.

8. Procédé selon la revendication 1, **caractérisé en ce que** le rayonnement infra-rouge comprend une gamme de rayonnement comprise entre 1 et 10 microns.

9. Procédé selon la revendication 1, **caractérisé en ce que** la source radiante (6) comprend au moins un brûleur catalytique (7)

10. Procédé selon la revendication 1, **caractérisé en ce que** l'enveloppe d'extraction (4) est obtenue à partir d'au moins un matériau relativement transparent vis à vis d'un rayonnement infra-rouge.

11. Procédé selon la revendication 1, **caractérisé en ce qu'**on dépose la première résine au fond du défaut (1), avec au moins une autre pièce (23) d'un tissu de fibres continues ou discontinues.

12. Procédé selon la revendication 1, **caractérisé en ce que** l'autre pièce (23) de tissu est composite, par exemple un préimprégné, car comprenant la première résine formant une matrice plastique dans laquelle les fibres continues ou discontinues sont distribuées.

13. Procédé selon la revendication 1, **caractérisé en ce que** l'objet composite est du type sandwich et comprend la couche alvéolaire (24) entre deux couches monolithiques (21) et (22).

14. Procédé selon la revendication 1, **caractérisé en ce que** la couche alvéolaire (22) et la partie (24) alvéolaire de remplacement sont faites en un matériau alvéolaire, par exemple une mousse plastique structurale, par exemple en résine époxy.

15. Procédé selon la revendication 1, **caractérisé en ce que** le moyen (3) de drainage gazeux est une grille, par exemple métallique.

## Patentansprüche

1. Verfahren zum Reparieren oder zum Rekonstruieren eines Gegenstandes (1) in Kompositbauweise, das eine mit Hohlräumen versehene Schicht (22) aufweist, die auf mindestens einer Seite mit einer Abdeckschicht versehen ist, beispielsweise Bienenwaben-Bauteil, wobei der Gegenstand (1) eine fehlerhafte Stelle (1a) aufweist, die zumindest die Abdeckschicht sowie die mit Hohlräumen versehene Schicht (22) beeinträchtigt, **gekennzeichnet durch** die aufeinanderfolgenden Schritte:
a) Nach dem Vorbereiten der fehlerhaften Stelle (1a) bringt man auf deren Boden mindestens ein Einsatzstück (23) oder ein eingebrachtes Material auf, deren Form und Abmessungen an diejenigen der fehlerhaften Stelle (1a) angepasst sind, wobei das Einsatzstück (23) oder das Material kontinuierliche oder diskontinuierliche, mechanisch feste, geordnete oder ungeordnete Fasern enthält; man bringt auf dem Boden der fehlerhaften Stelle (1a), entweder getrennt von oder zusammen mit den Fasern des Einsatzstückes (23) oder des Materiales, ein erstes Harz auf, um während des Schrittes (e) eine Matrix aus Kunststoff zu erhalten, in der die Fasern verteilt angeordnet sind.
b) Man fügt in die fehlerhafte Stelle (1a) ein mit Hohlräumen versehenes Ersatzteil (24) ein, beispielsweise ein Bienenwaben-Bauteil.
c) Man bringt ein zweites Harz auf dem frei liegenden Abschnitt des mit Hohlräumen versehenen Teils (24) zusammen mit mindestens einem Einsatzstück (2) eines Gewebes aus kontinuierlichen oder diskontinuierlichen Fasern auf, wobei das zweite Harz entweder getrennt von oder zusammen mit den Fasern des Einsatzstückes (2) aufgebracht wird.
d) Man bringt auf den eingebrachten Elementen in der fehlerhaften Stelle (1a) nacheinander und eins über dem anderen ein Mittel auf, zum Beispiel eine textile Matte (3) zum Entfernen von Gasen, nämlich der aus den Harzen in Schritt (e) austretenden Gase, sowie eine Umhüllung (4) zum Entfernen dieser Gase, die mit dem übrigen Gegenstand (1) einen relativ zur umgebenden Atmosphäre abgedichteten Raum (5) bildet, der die fehlerhafte Stelle (1a) sowie die eingebrachten Elemente umschließt.
e) Während des gesamten Evakuierens des abgedichteten Raumes (5) heizt man das eingebrachte Stück mittels einer Strahlungsquelle (6) auf, deren Strahlung eine Infrarot-Strahlung enthält, und man ordnet die Quelle im Verhältnis zu der fehlerhaften Stelle (1a) so an, dass die Umhüllung (4) zum Entfernen der aus der Matrix aus Kunststoff austretenden Gase bestrahlt wird, wobei die Strahlungsquelle (6) gegen die Umhüllung (4) auf der Seite jenseits der mit Hohlräumen versehenen Schicht (24) wirksam ist.

2. Verfahren nach Anspruch 1, **dadurch gekennzeichnet, dass** man nur in einem Schritt arbeitet.

3. Verfahren nach Anspruch 2, **dadurch gekennzeichnet, dass** das erste Harz eine Behandlungstemperatur erfordert, die niedriger ist als die Behandlungstemperatur des zweiten Harzes.

4. Verfahren nach Anspruch 1, **dadurch gekennzeichnet, dass** man in zwei Schritten arbeitet, nämlich in einem ersten Schritt, bei dem man am Boden der fehlerhaften Stelle (1a) ein Harz aufbringt, das mit Hohlräumen versehene Ersatzteil (24), beispielsweise ein Bienenwaben-Bauteil, einfügt, und mit den Schritten (c) und (d) weitermacht, und in einem zweiten Schritt, bei dem man ein Harz auf den oberen, frei liegenden Abschnitt des mit Hohlräumen versehenen Ersatzstückes (24) aufbringt, und dann erneut mit den Schritten (c) und (d) weitermacht.

5. Verfahren nach Anspruch 1, **dadurch gekennzeichnet, dass** das Ersatzstück (2) aus Gewebe ein Komposit-Bauteil ist, zum Beispiel ein vorimprägniertes Bauteil, das bereits das zweite Harz enthält, das die Matrix aus Kunststoff bildet, in der die kontinuierlichen oder diskontinuierlichen Fasern verteilt angeordnet sind.

6. Verfahren nach Anspruch 1, **dadurch gekennzeichnet, dass** die Harze aus einem thermisch vernetzbaren Polymer-Material bestehen.

7. Verfahren nach Anspruch 1, **dadurch gekennzeichnet, dass** die Harze aus einem thermoplastischen Polymer-Material bestehen.

8. Verfahren nach Anspruch 1, **dadurch gekennzeichnet, dass** die Infrarot-Bestrahlung einen Strahlungsbereich zwischen 1 und 10 Micron aufweist.

9. Verfahren nach Anspruch 1, **dadurch gekennzeichnet, dass** die Strahlungsquelle (6) mindestens einen katalytischen Brenner aufweist.

10. Verfahren nach Anspruch 1, **dadurch gekennzeichnet, dass** die Umhüllung (4) zum Entfernen mindestens aus einem Material hergestellt ist, das für Infrarot-Strahlung relativ durchlässig ist.

11. Verfahren nach Anspruch 1, **dadurch gekennzeichnet, dass** man das erste Harz auf dem Boden der fehlerhaften Stelle (1a) zusammen mit einem anderen Ersatzstück (23) eines Gewebes aus kontinuierlichen oder diskontinuierlichen Fasern aufbringt.

12. Verfahren nach Anspruch 1, **dadurch gekennzeichnet, dass** das andere Ersatzstück (23) aus Gewebe ein Komposit-Bauteil ist, zum Beispiel ein vorimprägniertes Bauteil, das bereits das erste Harz enthält, das eine Matrix aus Kunststoff bildet, in der die kontinuierlichen oder diskontinuierlichen Fasern verteilt angeordnet sind.

13. Verfahren nach Anspruch 1, **dadurch gekennzeichnet, dass** der Komposit-Gegenstand in Sandwich-Bauweise ausgebildet ist und die mit Hohlräumen versehene Schicht (24) zwischen zwei monolithischen Schichten (21, 22) aufweist.

14. Verfahren nach Anspruch 1, **dadurch gekennzeichnet, dass** die mit Hohlräumen versehene Schicht (22) und das mit Hohlräumen versehene Ersatzteil (24) aus einem mit Hohlräumen versehenen Material hergestellt sind, zum Beispiel einem Kunststoff-Strukturschaum, beispielsweise aus Epoxidharz.

15. Verfahren nach Anspruch 1, **dadurch gekennzeichnet, dass** das Mittel (3) zum Entfernen von Gas ein Gitter ist, zum Beispiel aus Metall.

## Claims

1. Process for reconstituting or reconstructing a composite object (1), comprising a cellular layer (22) connected, at least on one side, to a surface layer, for example honeycomb, the said object having a defect (1a) which affects at least the said surface layer and the said cellular layer, **characterized in that**, in succession
a) having prepared the defect (1a), at least one added piece (23) or material, the shape and dimensions of which are matched to those of the defect (1a), is placed at the bottom thereof, the piece or the said material comprising mechanically strong, continuous or staple fibres which may or may not be organized; a first resin is deposited at the bottom of the said defect (1a) separately from or together with the fibres of the said piece or of the said material in order to obtain, during step (e), a plastic matrix in which the said fibres are distributed;
b) a cellular replacement part (24), for example honeycomb, is inserted in the defect (1a);
c) a second resin is deposited on the exposed part of the cellular part (24), with at least one piece (2) of a fabric of continuous or staple fibres, the second resin being applied separately from or together with the fibres of the said piece;
d) a gas-draining means, for example a textile web (3), for draining the gases given off by the resins during step (e), and a cover (4) for extracting the said gases are placed, in succession and one on top of the other, on the added elements in the defect (1a), which together with the rest of the object form an enclosure (5) which is sealed with respect to the external atmosphere and circumscribes the defect (1a) and the said added elements;
e) while evacuating the sealed enclosure (5), the added piece is heated using a radiant source (6), the emission from which comprises infrared radiation, and placing the said source with respect to the defect (1a) so as to irradiate the cover (4) for extracting the gases given off by the plastic matrix, and by means of which the radiant source has an effect beyond the cellular layer (24).

2. Process according to Claim 1, **characterized in that** it is carried out in a single step.

3. Process according to Claim 2, **characterized in that** the first resin requires a lower treatment temperature than the treatment temperature for the second resin.

4. Process according to Claim 1, **characterized in that** the procedure is carried out in two steps, namely a first step during which a resin is deposited at the bottom of the defect (1a), the said cellular, for example honeycomb, replacement part (24) is inserted and the operations (c) and (d) are carried out, and a second step in which a resin is applied to the exposed upper part of the cellular part (24) and the operations (c) and (d) are carried out again.

5. Process according to Claim 1, **characterized in that** the piece (2) of fabric is a composite, for example a prepreg, as it comprises the second resin forming a plastic matrix in which the continuous or staple fibres are distributed.

6. Process according to Claim 1, **characterized in that** each resin is a thermocrosslinkable polymer material.

7. Process according to Claim 1, **characterized in that** each resin is a thermoplastic polymer material.

8. Process according to Claim 1, **characterized in that** the infrared radiation comprises a radiation range of between 1 and 10 microns.

9. Process according to Claim 1, **characterized in that** the radiant source (6) comprises at least one catalytic burner (7).

10. Process according to Claim 1, **characterized in that** the extraction cover (4) is made from at least one material which is relatively transparent with respect to infrared radiation.

11. Process according to Claim 1, **characterized in that** the first resin is deposited at the bottom of the defect (1) together with at least one other piece (23) of a fabric of continuous or staple fibres.

12. Process according to Claim 1, **characterized in that** the other piece (23) of fabric is a composite, for example a prepreg, as it comprises the first resin forming a plastic matrix in which the continuous or staple fibres are distributed.

13. Process according to Claim 1, **characterized in that** the composite object is of the sandwich type and comprises the cellular layer (24) between two monolithic layers (21) and (22).

14. Process according to Claim 1, **characterized in that** the cellular layer (22) and the cellular replacement part (24) are made of a cellular material, for example a structural plastic foam, for example made of epoxy resin.

15. Process according to Claim 1, **characterized in that** the gas-draining means (3) is a mesh, for example a metal mesh.
